Europäisches Patentamt
European Patent Office
Office européen des brevets

(11) Publication number: 0 376 602 A2

# EUROPEAN PATENT APPLICATION

(21) Application number: 89313340.5

(22) Date of filing: 20.12.89

(51) Int. Cl.5: C08G 18/50, C08G 18/18, C08G 18/32, //(C08G18/50, 101:00)

(30) Priority: 28.12.88 JP 328906/88
28.12.88 JP 329134/88

(43) Date of publication of application: 04.07.90 Bulletin 90/27

(84) Designated Contracting States: DE ES FR GB IT NL SE

(71) Applicant: MITSUI TOATSU CHEMICALS, Inc.
2-5 Kasumigaseki 3-chome
Chiyoda-Ku Tokyo 100(JP)

(72) Inventor: Nishioka, Toyoyasu
Kugi 4-10-8
Zushi-shi Kanagawa-ken(JP)
Inventor: Okubo, Kazuhiko
Iizima-cho 2882 Sakae-ku
Yokohama-shi Kanagawa-ken(JP)
Inventor: Sakai, Seijiro
Shimokurata-cho 1269 Totsuka-ku
Yokohama-shi Kanagawa-ken(JP)
Inventor: Tamura, Satoshi
Hirado 3-42-7-134 Totsuka-ku
Yokohama-shi(JP)

(74) Representative: Hayward, Denis Edward Peter et al
Lloyd Wise, Tregear & Co. Norman House
105-109 Strand
London WC2R 0AE(GB)

## (54) Process for producing polyurethane foams.

(57) There is disclosed a process for producing polyurethane foams by reacting an organic polyol and an organic polyisocyanate in the presence of a blowing agent, a catalyst, and a surfactant, wherein a tertiary triamine derivative represented by the formula (I) in claim 1 is used. According to the disclosure, the polyurethane foam obtained is substantially free from odors and does not cause a polyvinyl chloride resin covering or a film or a coating covering of the polyurethane foam product to discolor or to deteriorate.

EP 0 376 602 A2

Xerox Copy Centre

# PROCESS FOR PRODUCING POLYURETHANE FOAMS

The present invention relates to a process for producing polyurethane foams. More particularly, the present invention relates to a process for producing polyurethane foams wherein the reaction activity in the reaction system is high and the foam is substantially free from odors, and which prevents a polyvinyl chloride resin covering or a film or a coating covering on the polyurethane molded product from discoloration and deterioration after the blowing is completed.

Conventionally, in the manufacture of polyurethane foams, as catalyst, use is made of organotin catalysts and organic amine catalysts.

In the case of high resilience cold-cure flexible polyurethane foams, wherein a high-reactive polyol (generally a polyol in which the ratio of the primary hydroxyl group that is located at its terminal is 65 % or over) is used, bursting of the cell walls of the foam is rather difficult compared with in the hot-cure flexible polyurethane foams which use a conventional relatively low-reactive polyol (a polyol wherein the ratio of the primary terminal hydroxyl group is 65 % or below), and therefore an organometallic catalyst is used in a minimum required amount, or is not used at all. That is, in this case, a tertiary amine is used as a major reaction catalyst. At any rate, tertiary amine catalysts are used as a indispensable raw material in the production of flexible polyurethane foams. In the process for the production of polyurethane foams, for example by the molding method, use is made of, as a major catalyst, for example triethylenediamine[1,4-diazabicyclo(2,2,2)octane], and as a co-catalyst, for example N-methylmorpholine, an N-ethylmorpholine, bis[2-(N,N′-dimethylamino)ethyl] ether, or a triethylamine that is a volatile or sublimable tertiary amine.

When such a volatile or sublimable catalyst was used substantially in a required amount in the production of polyurethane foams, there were defects in that the odors of the polyurethane foams were conspicuous, and the catalyst migrates, for example, to the covering (particularly to the polyvinyl chloride resin surface covering) on the polyurethane foams, thereby causing the covering to be discolored or deteriorated by a dehydrochlorination reaction.

Further, the volatile or sublimable catalyst was accompanied by foul odors and a human toxicity problem due to amine vapor in the production steps of the polyurethane foams, particularly at the time of blowing and removal from the mold.

Further, although a process using a primary amine as a catalyst for the production of polyurethane foams (Japanese Patent Application (OPI) No. 4846/1971), and a process using a carbonate of organic amines (Japanese Patent Application (OPI) No. 191743/1984) were recommended, in these processes the catalyst activity was low and the curing property were poor. Increasing of the amount of catalyst to be used in order to solve this problem resulted in problems of the cost, discoloration of polyvinyl chloride resins, and odors, and again the foam was not satisfactorily free of odors.

An object of the present invention is to provide a process for producing polyurethane foams, which is excellent in curing property and moldability, substantially without odors, and discolorations and deteriorations of a covering (particularly a polyvinyl chloride resin surface film) on the polyurethane foams.

Other and further objects, features, and advantages of the invention will become more fully apparent from the following description.

The inventors have studied intensively to attain the above objects and have been able to reach a discovery that in the polyurethane foams, a tertiary triamine derivative having hydroxyl groups reactive with isocyanate groups and possessing a catalytic action in the molecule can meet the objects, leading to the present invention.

According to the present invention, since a conventional catalyst, such as a tertiary amine, is not used, or very small amount of the catalyst is used, the amine odors can be reduced, and a covering (particularly a polyvinyl chloride resin surface film) on the polyurethane foams can be prevented from discoloring and deteriorating.

That is, the present invention provides a process for producing polyurethane foams by reacting an organic polyol (hereinafter referred to as polyol component) and an organic polyisocyanate (hereinafter referred to as polyisocyanate component) in the presence of a blowing agent, which comprises conducting the reaction by utilizing a tertiary triamine derivative represented by the formula (I):

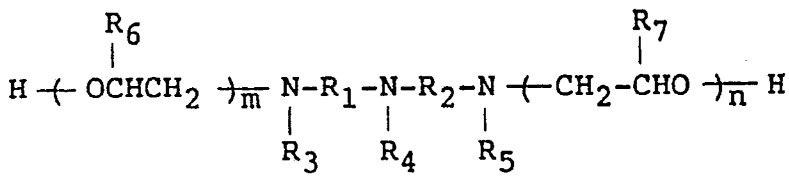

(I)

wherein $R_1$ and $R_2$, which may be the same or different, each represent an alkylene group having 1 to 10 carbon atoms, $R_3$, $R_4$, and $R_5$, which may be the same or different, each represent an alkyl group having 1 to 10 carbon atoms, $R_6$ and $R_7$, which may be the same or different, each represent hydrogen or a methyl group, and m and n each are an integer of 0 to 10, provided that $m+n$ is not 0.

The tertiary triamine derivative used in the present invention is one having a structure shown by formula (I), wherein $R_1$ and $R_2$, which may be the same or different, each represent a linear or branched alkylene group having 1 to 10 carbon atoms, preferably a linear or branched alkylene group having 1 to 4 carbon atoms, such as a methylene group, an ethylene group, a propylene group, and a butylene group, and particularly preferably an ethylene group.

$R_3$, $R_4$, and $R_5$, which may be the same or different, each represent a linear or branched alkyl group having 1 to 10 carbon atoms, preferably a linear or branched alkyl group having 1 to 4 carbon atoms, such as a methyl group, an ethyl group, a propyl group, and a butyl group, and particularly preferably a methyl group.

$R_6$ and $R_7$, which may be the same or different, each represent hydrogen or a methyl group, and m and n each are an integer of 0 to 10, provided that $m+n$ is not 0, preferably m and n each are an integer of 0 to 3, provided that $m+n$ is not 0.

The tertiary triamine derivative represented by formula (I) used in the present invention can be easily obtained by addition polymerization of a tertiary amine represented by the following formula (II):

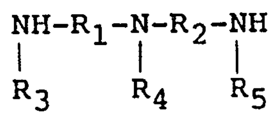

(II)

wherein $R_1$, $R_2$, $R_3$, $R_4$, and $R_5$ each have the same meanings as those defined in formula (I) given above, with an alkylene oxide by the usual method.

It is suitable to use as the alkylene oxide, ethylene oxide (hereinafter abbreviated EO), propylene oxide (hereinafter abbreviated PO), or a mixture of PO and EO.

The molar ratio of EO, PO, or a mixture of EO and PO to the triamine of formula (II) is suitably 1 : 1 to 10 : 1, and in view of the catalyst activity, preferably 1 : 1 to 6 : 1, and more preferably 2 : 1 to 3 : 1.

If the molar ratio of EO, PO, or a mixture of EO and PO to the triamine is made smaller than 1 : 1, the molecular weight of the tertiary triamine derivative becomes small and an odor problem arises, while if the molar ratio of EO, PO, or a mixture of EO and PO to the triamine is made greater than 10 : 1, the catalyst activity lowers.

The thus obtained tertiary triamine derivative is one of any compounds represented by formula (I) or a mixture thereof, wherein m and n each are an integer of 0 to 10, provided that $m+n$ is not 0, and it is substantially free from the triamine of formula (II), and the present invention is distinguished by the use of a tertiary triamine derivative wherein at least one mol of EO or OP is added to the triamine of formula (II). Here the expression "substantially free from triamine" means that the content of triamine is preferably 5 wt.% or below.

The amount of the tertiary triamine derivative represented by formula (I) used in the present invention is 0.1 to 10 wt.%, preferably 0.1 to 5 wt.%, and more preferably 0.1 to 3 wt.% of the total amount of the polyol components (containing compound represented by said formula).

If the amount of the tertiary triamine derivative to be used is less than 0.1 wt.%, the curing speed at the time of the production of the polyurethane foams lowers. On the other hand, if the amount of the tertiary triamine derivative to be used exceeds 10 wt.%, the viscosity of the polyurethane foam reaction mixture increases drastically at the time of the molding, and therefore due to a decrease in the flowability, the moldability will be deteriorated.

The process for producing polyurethane foams may follow conventional methods,for example,as described in Japanese Patent Application (OPI) No. 191743/1984, except that the triaminealkylene oxide adduct as shown in formula (I) is employed.

In the embodiment of the present invention, there is no particular restriction for the manner of using the tertiary triamine derivative represented by formula (I). For example, (i) the tertiary triamine derivative may be used by mixing it with a polyol previously, and by reacting the mixture with polyisocyanate component to foam and mold polyurethane foams in a one-shot process, or (ii) the tertiary polyamine derivative may be dissolved in a polyol followed by reaction with a polyisocyanate, to make a polyurethane prepolymer (hereinafter referred to as polymer modified polyol) having terminal hydroxyl groups, and this reaction mixture may be used, after adjusting it with a polyol to be used in the polyurethane foams, in the reaction with a polyisocyanate to foam and mold.

As the polyol mentioned above for dissolving the tertiary triamine derivative or the polymer modified polyol, use is made of one that is selected from the below-mentioned examples of polyol component, which can be used in the production of polyurethane foams, and the selected polyol may be the same or different from the polyol that will be used in the production of polyurethane foams.

As the polyisocyanate mentioned above for use to prepare the polymer modified polyol, use is made of one selected from the below-mentioned examples of polyisocyanate component, which can be used in the production of polyurethane foams, and the selected polyisocyanate may be the same as or different from the polyisocyanate that will be used in the production of polyurethane foams.

In the present invention, although the ratio of the polyol and the tertiary triamine derivative of formula (I), in the mixture for the preparation of the polymer modified polyol, may vary depending on the properties of the intended polymer modified polyol, the ratio is 100 : 1 to 20, preferably 100 : 1 to 10.

The ratio of the active hydrogen of the tertiary triamine derivative to the isocyanate group of the polyisocyanate used for obtaining the polymer modified polyol is 1 : 1.5 or less (not including 0), preferably 1 : 1.1 or less (not including 0). If the ratio of the isocyanate group to the active hydrogen exceeds 1.5, the viscosity of the polymer modified polyol becomes too high, and the dispersion stability becomes poor.

In the present invention, then, the polymer modified polyol and a polyisocyanate may be reacted to produce the intended polyurethane foams. Examples of the polyisocyanate used herein include those below.

Examples of the polyol component to be used in the present invention are monomer polyols (e.g., ethylene glycol, propylene glycol, diethylene glycol, triethylene glycol, dipropylene glycol, trimethylene glycol, 1,3- and 1.4-butanediol); alkanolamines (e.g., triethanolamine and diethanolamine); polyether polyols or polytetramethylene ether glycols obtained by adding one or more of ethylene oxide, propylene oxide, butylene oxide, tetrahydrofuran, and styrene oxide to water, ethylene glycol, propylene glycol, diethylene glycol, triethylene glycol, dipropylene glycol, trimethylene glycol, 1,3- and 1.4-butanediol, 1,5-pentanediol, 1,2-hexylene glycol, 1,10-decanediol, 1,2-cyclohexanediol, 2-butene-1,4-diol, 3-cyclohexane-1,1-dimethanol, 4-methyl-3-cyclohexane-1,1-dimethanol, 3-methylene-1,5-pentanediol, (2- hydroxydiethoxy)-1-propanol-4-(2-hydroxyethoxy)-1-butanol, 5-(2-hydroxypropoxy)-1-pentanol, 1-(2-hydroxypropoxy)-2-octanol, 3-allyloxy-1,5-pentanediol, 2-allyloxymethyl-2-methyl-1,3-pentanediol, [(4,4-pentyloxy)-methyl]-1,3-propanediol, 3-(o-propenylphenoxy)-1,2-propanediol, 2,2′-diisopropylidene bis(p-phenyleneoxy)diethanol, glycerin, 1,2,6-hexanetriol, 1,1,1-trimethylolethane, 1,1,1-trimethylolpropane, 3-(2-hydroxyethoxy)-1,2-propanediol, 3-(2-hydroxypropyl)-1,2-propanediol, 2,4-dimethyl-2-(2-hydroxyethoxy)-methylpentane-1,5-diol, 1,1,1-tris[(2-hydroxy)-methyl]ethane, 1,1,1-tris-[(2-hydroxy)methyl]propane, pentaerythritol, sorbitol, sucrose, lactose, α-methylglucoside, α-hydroxyalkylglycosides, novolak resins, phosphoric acid, and polyphosphoric acids (e.g., tripolyphosphoric acid and tetrapolyphosphoric acids, phenol/aniline/formaldehyde ternary condensate, aniline/formaldehyde condensate, caprolactones, aliphatic polyamines (e.g., ethylenediamine, diethylenetriamine, and triethylenetetramine), aromatic polyamines (e.g., methyleneorthochloroaniline, 4,4′-diphenylmethanediamines, aniline, 2,4-tolylenediamine, and 2,6-tolylenediamine), and alkanolamines (e.g., triethanolamine and diethanolamine); polyester polyols obtained by reacting one or more compounds having at least two hydroxyl groups (e.g., ethylene glycol, propylene glycol, diethylene glycol, triethylene glycol, dipropylene glycol, trimethylene glycol, 1,3- and 1,4-butanediol, tetramethylene glycol, neopentyl glycol, hexamethylene glycol, decamethylene glycol, glycerin, trimethylolpropane, pentaerythritol, and sorbitol), and one or more compounds having at least two carboxyl groups (e.g., malonic acid, maleic acid, succinic acid, adipic acid, tartaric acid, pimelic acid, sebacic acid, oxalic acid, phthalic acid, terephthalic acid, trimellitic acid, and hemimellitic acid); polymers obtained by ring opening polymerization of cyclic esters, such as polycaprolactones;

and so-called polymer polyol compositions, which are obtained by graft-polymerization of an ethylenically unsaturated compound in a polyether polyol and/or a polyester polyol as described, for example, in Japanese Patent Publication Nos. 24737/1964, 3473/1966, 22108/1968, 8230/1969, and 47597/1972, and Japanese Patent Application (OPI) Nos. 34991/1973, 50398/1976, 70284/1976, 11249/1977, 4092/1978, 13700/1978, 64264/1979, 78297/1978, 133599/1979, and 5988/1980. As the above mentioned ethylenically

unsaturated compound suitable for the preparation of such a composition, acrylonitrile, styrene, or the like can be mentioned. Further, 1,2- polybutadienepolyol and 1,4-polybutadienepolyol can also be used.

A preferable range of the hydroxyl value (number) of the above-mentioned polyols is 20 to 150 mg KOH/g, and the polyols can be used alone or in combination.

The organic isocyanate component to be used in the present invention are ones usually used for polyurethane foams, and although there is no particular restriction, examples include 2,4-tolylene diisocyanate, 2,6-tolylene diisocyanate, mixtures of 2,4-tolylene diisocyanate and 2,6-tolylene diisocyanate in isomer ratios of 80/20 (TDI-80) and 65/35 (TDI-65), crude tolylene diisocyanate, diphenylmethane-4,4′-diisocyanate, polyphenylmethylene polyisocyanate (as known crude MDI, regardless of preparation method), known modified diisocyanates modified by a carbodiimido group and the like (e.g., diphenylmethane-4,4′-diisocyanate, dianisidinediisocyanate, toluidinediisocyanate, xylylenediisoyanate, bis(2-isocyanatoethyl)-fumarate, bis(2-isocyanatoethyl)-carbonate, bis(2-isocyanatoethyl), 1,6-hexamethylenediisocyanate, 1,4-tetramethylenediisocyanate, 1,10-decamethylenediisocyanate, cumene-2,4-diisocyanate, 4-methoxy-1,3-phenylenediisocyanate, 4-bromo-1,3- phenylenediisocyanate, 4-ethoxy-1,3-phenylenediisocyanate, 2,4′-diisocyanatodiphenylether, 5,6-dimethyl-1.3-phenylenediisocyanate, 2,4-dimethyl-1,3-phenylenediisocyanate, 4,4′-diisocyanatodiphenylether, bis-5,6-(2-isocyanatoethyl)bicyclo[2,2,1]hepto-2-ene, bendizinediisocyanate, 4,6-dimethyl-1,3-phenylenediisocyanate, 9,10-anthracenediisocyanate, 4,4′-diisocyanatobenzyl, 3,3′-dimethyl-4,4′-diisocyanatodiphenylmethane, 2,6-dimethyl-4,4′-diisocyanatodiphenyl, 2,4-diisocyanatostilbene, 3,3′-dimethyl-2,4′-diisocyanatodiphenyl, 1,4-anthracenediisocyanate, 2,5-fluorenediisocyanate, 1,8-naphthalenediisocyanate, 2,6-diisocyanatobenzofran, and 2,4,6-toluenetriisocyanate), dimers and trimers of these organic isocyanates, and prepolymers of NCO terminal groups obtained from these organic isocyanate compounds, and the above mentioned compound having a active hydrogen. These organic isocyanates are used solely or in a mixture of two or more.

The amount of the isocyanate component (including the amount for use in the preparation of polyurethane prepolymer) to be used is suitably in the range of 0.70 to 1.40, preferably 0.8 to 1.1, in the equivalent weight ratio (NCO/H) of the isocyanate group to active hydrogen of the above-mentioned active hydrogen compounds (polyol and the amine compound optionally used in the polymethane foam as a cross linking agent).

The catalysts that can be used in the present invention are ones usually used for polyurethane foams, and although there is no particular restriction, examples include an amine-type urethanizing catalyst (e.g., formates or other salts of triethylamine, tripropylamine, triisopropanolamine, tributylamine, trioctylamine, hexadecyldimethylamine, N-methylmorpholine, N-ethylmorpholine, N-octadecylmorpholine, monoethanolamine, diethanolamine, triethanolamine, N-methyldiethanolamine, N,N-dimethylethanolamine, diethylenetriamine, N,N,N′N′-tetramethylethylenediamine, N,N,N′N′-tetramethylpropylenediamine, N,N′,N′-tetramethylbutanediamine, N,N,N′,N′-tetramethyl-1,3-butanediamine, N,N,N′,N′-tetramethylhexamethylenediamine, bis[2-(N,N-dimethylamino)ethyl)]ether, N,N-dimethylbenzyldiamine, N,N-dimethylcyclohexylamine, N,N,N′,N′,N′-pentamethyldiethylenetriamine, and triethylenediamine); oxyalkylene adducts of primary and secondary amines, aza ring compounds, such as N,N-dialkylpiperazines; various N,N′,N″-trialkylaminoalkylhexahydroxytriazines; β-aminocarbonyl catalysts described in Japanese Patent Publication No. 43517/1977; β-aminonitrile catalysts described in Japanese Patent Publication No. 14279/1978; and carbonate salts of primary amines described in Japanese Patent Application (OPI) No. 191743/1984), and an organometallic urethanizing catalyst (e.g., stannous acetate, stannous octoate, stannous oleate, stannous laurate, dibutyltindilaurate, dibutyltin dichloride, lead octoate, stannous naphthenate, nickel naphthenate, and cobalt naphthenate).

These catalysts may be used alone or in combination.

The amount of amine-type catalyst to be used is in the range of 0 to 1.0 wt.% for the total amount of polyol component, preferably 0 to 0.3 wt.% in view of the odor problem and the discoloration problem of polyvinyl chloride. The amount of organometallic urethane catalysts to be used is in the range of 0 to 0.3 wt.% for the total amount of polyol component.

The blowing agent used in the present invention include, for example, water, trichloromonofluoromethane, dichlorodifluoromethane, methylene chloride, trichlorotrifluoroethane, dibromotetrafluoroethane, trichloroethane, pentane, n-hexane, dichlorotrifluoroethane, or dichlorofluoroethane, which may be used solely or in a combination of two or more.

In the present invention, the surfactant is a usual organosilicon surfactant, such as L-520, L-532, L- 540, L-544, L-550, L-355, L-5305, L-5307, L-5309, L-5710, L-5720, L-5740M. and L-6202 (trade names, manufactured by Nihon Unicar Co., Ltd.); SH-190, SH192. SH-194, SH-200, SRX-253, SRX-274C, SF-2961, SF-2962, SRX-280A, and SRX 294A (trade names, manufactured by Toray Silicone Co., Ltd.); F-114, F-121, F-122, F-220, F-230/, F-258, and F-260B (trade names, manufactured by Shinetsu Silicone Co., Ltd.), and B-4113

(trade name, manufactured by Gold Schmit Co., Ltd.).

The amount of the surfactant to be used is in the range of 0.1 to 10.0 parts by weight, preferably 0.1 to 5 parts per 100 parts by weight of polyol component.

In the present invention, there may be contained dyes, colorants, flame retardants, fillers, and the like, if necessary.

In the method of the present invention, the foaming and molding process may be carried out in the manner employed in the usual foaming and molding process with no particular restriction. A representative processing condition can be shown such that, for example, in cold-cure mold foam, the temperature of the materials is 20 to 30 °C, that of the mold is 50 to 60 °C, the reaction time is 3 to 10 minutes, and the temperature of the oven is 80 to 120 °C, and in hot-cure mold foam, the temperature of the materials is 20 to 30 °C, that of the the reaction time is 8 to 15 minutes, and the temperature of the oven is 150 to 200 °C.

The polyurethane foam obtained according to the present invention is free from odors of the catalyst at the time of foaming and removal from the mold, this method does not cause a covering (particularly a polyvinyl chloride resin surface film) on the polyurethane foams to discolor or deteriorate, it is excellent in catalyst activity (curing property) and catalyst performance (moldability), it can improve the productivity, and it can withstand longer use.

The present invention will now be described in more detail with reference to Examples, wherein parts are by weight unless otherwise indicated.

Abbreviations used in the Examples have the following meanings:

Polyol A: a polyether polyol having a hydroxyl value of 28 mg KOH/g, obtained by addition polymerization of glycerin with propylene oxide and ethylene oxide.

Polyol B: a polyether polyol having a hydroxyl value of 34 mg KOH/g, obtained by addition polymerization of glycerin with propylene oxide and ethylene oxide.

Polyol C: a polymer polyol having a hydroxyl value of 32 mg KOH/g, obtained in such a way that acrylonitrile was polymerized in a polyether polyol produced by addition polymerization of glycerin/pentaerythritol with propylene oxide and ethylene oxide, so that the polymer content might be 8 %.

KL-210: trade name, a crosslinking agent having a hydroxyl value of 830 mg KOH/g, produced by Mitsui Toatsu Chemicals, Inc.

TMDETA: N,N′,N″-trimethyldiethylenetriamine.

SRX-274C: trade name, a surfactant produced by Toray Silicon Co., Ltd.

L-5309: trade name, a surfactant produced by Nihon Unicar Co., Ltd.

Niax A-1: trade name, an amine catalyst produced by Union Carbide Co.

Kao-lizer No. 1: trade name, an amine catalyst produced by Kao Co., Ltd.

Ucat-2790: trade name, an amine catalyst produced by Sun-Abot Co., Ltd.

Hx-35: trade name, an amine catalyst produced by Tosoh Co., Ltd.

Dabco-x-DM: trade name, an amine catalyst produced by Air-Product Co., Ltd.

Isocyanate A: a mixture of 80 wt.% of 2,4-tolylene diisocyanate and 20 wt.% of 2,6-tolylene diisocyanate.

Isocyanate B: an isocyanate composition having an NCO-group content of 26.0 wt.%, obtained by urethane-modifying a diphenylmethane diisocyanate composition with polyol A.

Isocyanate C: a mixture of 80 wt.% of isocyanate A and 20 wt.% of polymeric MDI.

## Reference Examples 1 to 5

As shown in Table 1, alkylene oxide adducts of TMDETA (hereinafter referred to triamine derivative) were synthesized. Details are described below.

## Reference Example 1

857 g (5.9 mol) of TMDETA was placed in an autoclave, then after replacement with nitrogen of the atmosphere, 343 g (5.9 mol) of PO was charged and the reaction was effected for 4 hours at 110 °C. The reaction product was a colorless transparent liquid having a slight amine odor, the hue (Gardner) being G-1, the OH value being 580 mg KOH/g, the pH being 11.6; the water content was 0.16 wt.% and the viscosity was 12 cps/25 °C.

It was found, by a gas chromatography chart, that the main component of the reaction product was a compound represented by formula (I), in which m = 1 and n = 1, and TMDETA was almost absent. $R_1$ and $R_2$ each were an ethylene group, and $R_3$ to $R_7$ each were a methyl group.

Reference Example 2

A triamine derivative was synthesized by the same procedure as in Reference Example 1, except that the charge of materials was changed as shown in Table 1. Results are shown in Table 1. It was found that the main component of the obtained triamine derivative was a compound represented by formula (I), in which m = 1 and n = 1, and TMDETA was almost absent. $R_1$ and $R_2$ each were an ethylene group, and $R_3$ to $R_7$ each were a methyl group.

Reference Example 3

A triamine derivative was synthesized by the same procedure as in Reference Example 1, except that the charge of materials was changed as shown in Table 1. Results are shown in Table 1. It was found that the main component of the obtained triamine derivative was a compound represented by formula (I), in which m = 1 and n = 0, and TMDETA was almost absent. $R_1$ and $R_2$ each were an ethylene group, $R_3$ to $R_5$ each were a methyl group, and $R_6$ and $R_7$ each were a hydrogen atom.

Reference Example 4

A triamine derivative was synthesized by the same procedure as in Reference Example 1, except that the charge of materials was changed as shown in Table 1. Results are shown in Table 1. It was found that the main component of the obtained triamine derivative was a compound represented by formula (I), in which m = 1 and n = 1, and TMDETA was almost absent. $R_1$ and $R_2$ each were an ethylene group, $R_3$ to $R_5$ each were a methyl group, and $R_6$ and $R_7$ each were a hydrogen atom.

Reference Example 5

A triamine derivative was synthesized by the same procedure as in Reference Example 1, except that the charge of materials was changed as shown in Table 1. Results are shown in Table 1.

Since, in Reference Example 5, 0.3 wt.% of KOH was used as catalyst for alkylene oxide addition, neutralization with a 75 % aqueous phosphoric acid solution was carried out after the completion of the reaction, then the resulting calcium phosphate was filtered off, and the dehydration operation was effected under reduced pressure at 100 °C. The results are shown in Table 1.

It was found that the main component of the obtained triamine derivative was a compound represented by formula (I), in which m = 3 and n = 3, and TMDETA was almost absent. $R_1$ and $R_2$ each were an ethylene group, $R_3$ to $R_5$ each were a methyl group, and $R_6$ and $R_7$ each were a hydrogen atom.

The triamine derivatives obtained in Reference Examples 1 to 5 were designated triamine derivatives A, B, C, D, and E, respectively.

Gas chromatography was carried out using a Shimazu GC-7A (trade name, made by Shimazu Seisakusho, Ltd., Japan) under the following conditions:
Column filler : SE-30 (trade name, made by Gasukuro Kogyo Co., Ltd., Japan)
Column temperature : 80 ~ 250 °C
Injection temperature : 300 °C
Temperature raising rate : 8 °C/min

Table 1

| Reference Example | 1 | 2 | 3 | 4 | 5 |
|---|---|---|---|---|---|
| Triamine derivative | A | B | C | D | E |
| Charged molar ratio: | | | | | |
| triamine (*1) | 1.0 | 1.0 | 1.0 | 1.0 | 1.0 |
| EO (*2) | 0 | 0 | 1.0 | 2.0 | 6.0 |
| PO (*3) | 1.0 | 2.0 | 0 | 0 | 0 |
| Catalyst for alkylene oxide addition (wt.%): | | | | | |
| KOH | 0 | 0 | 0 | 0 | 0.3 |
| Reaction temperature (°C) | 110 | 110 | 110 | 110 | 110 |
| Reaction time (hr) | 4.0 | 6.0 | 3.0 | 3.0 | 4.5 |
| Post-treatment | none | none | none | none | neutralization, filtration, and dehydration |
| Product: | | | | | |
| Hue(Gardner) | G-1 | G-1 | G-1 | G-1 | G-1 |
| OHV mg KOH/g | 580 | 455 | 610 | 496 | 343 |
| pH | 11.6 | 11.5 | 11.7 | 11.0 | 11.1 |
| Water content (wt.%) | 0.16 | 0.20 | 0.16 | 0.15 | 0.05 |
| Viscosity (cps/25°C) | 12 | 33 | 27 | 108 | 150 |

(*1): N,N′,N″-trimethyldiethylenetriamine
(*2): ethylene oxide
(*3): propylene oxide

Reference Example 6

37.4 g of isocyanate A was added over a period of 10 minutes to a mixture of 912.6 g of polyol B and 50 g of triamine derivative B that had been adjusted to 20°C and was vigorously being stirred. Then 1 g of stannous octoate was added thereto and stirring was continued for 5 more minutes. The temperature of the mixture rose to 47°C, and it was turbid white in color. The mixture was cooled and designated polymer modified polyol A. The polymer modified polyol A had a hydroxyl value of 31 mg KOH/g and a viscosity of about 2,300 cp/25°C.

Reference Example 7

35.2 g of isocyanate A was added over a period of 10 minutes to a mixture of 914.8 g of polyol B and 50 g of triamine derivative D that was adjusted to 20°C and was being vigorously stirred. Then 1 g of stannous octoate was added thereto and stirring was continued for 5 more minutes. The temperature of the mixture rose to 44°C, and it was turbid white in color. The mixture was cooled and designated polymer modified polyol B. The polymer modified polyol B had a hydroxyl value of 31 mg KOH/g and a viscosity of about 2,300 cp/25°C.

Example 1

71.1 parts of isocyanate B was added to a resin premix obtained by mixing well 100 parts of polyol A, 3.0 parts of deionized water, 2.0 parts of diethanolamine, 0.5 part of SRX-274C, and 3.0 parts of triamine derivative A obtained in Reference Example 1, and after they were stirred vigorously at 25°C for 6 seconds, the mixture was poured into a polypropylene beaker. Then immediately a commercially available polyvinyl

chloride film was stuck to the reaction mixture that was foaming and expanding. The period from the point when the resin premix and the isocyanate were mixed to the point where the expansion of the polyurethane foam stopped and the generated carbon dioxide was released from the polyurethane foam surface was recorded, and this was referred to as the rise time. The results are shown in Table 2.

Examples 2 to 5

Example 1 was repeated, except that instead of triamine derivative A, triamine derivatives B, C, D, and E were used respectively. The results are shown in Table 2.

Example 6

72.0 parts of isocyanate B was poured to a mixture of 100 parts of polymer modified polyol A, 3.0 parts of deionized water, 2.0 parts of diethanolamine, and 0.5 part of SRX-274C, and the obtained mixture was stirred at 25 °C for 6 seconds vigorously and poured into a polypropylene beaker. Thereafter the procedure was the same as in Example 1. Results are shown in Table 2.

Example 7

Example 6 was repeated, except that instead of polymer modified polyol A, polymer modified polyol B was used. Results are shown in Table 2.

Table 2

| Example | 1 | 2 | 3 | 4 | 5 | 6 | 7 |
|---|---|---|---|---|---|---|---|
| Polyol A | 100 | 100 | 100 | 100 | 100 | - | - |
| Polymer modified polyol A | - | - | - | - | - | 100 | - |
| Polymer modified polyol B | - | - | - | - | - | - | 100 |
| Deionized water | 3.0 | 3.0 | 3.0 | 3.0 | 3.0 | 3.0 | 3.0 |
| Diethanolamine | 2.0 | 2.0 | 2.0 | 2.0 | 2.0 | 2.0 | 2.0 |
| SRX-274C | 0.5 | 0.5 | 0.5 | 0.5 | 0.5 | 0.5 | 0.5 |
| Triamine derivative A | 3.0 | - | - | - | - | - | - |
| Triamine derivative B | - | 3.0 | - | - | - | - | - |
| Triamine derivative C | - | - | 3.0 | - | - | - | - |
| Triamine derivative D | - | - | - | 3.0 | - | - | - |
| Triamine derivative E | - | - | - | - | 3.0 | - | - |
| Isocyanate B | 71.1 | 71.1 | 71.1 | 71.1 | 71.1 | 72.0 | 72.0 |
| Ratio of the triamine derivative (%*) | 2.86 | 2.86 | 2.86 | 2.86 | 2.86 | 4.90 | 4.90 |
| Rise time (sec) | 72 | 51 | 55 | 39 | 43 | 46 | 45 |
| Physical properties (measured in accordance with JIS K6401) | | | | | | | |
| Density ($kg/m^3$) | 63.8 | 52.6 | 56.4 | 51.4 | 53.7 | 55.2 | 54.5 |
| Ball rebound resilience (%) | 56 | 59 | 58 | 61 | 58 | 59 | 59 |
| State of cells | good | good | good | good | good | good | good |
| ΔE | 2.61 | 2.80 | 2.16 | 1.68 | 2.28 | 1.51 | 1.60 |
| Amine odor | none | none | none | none | none | none | none |

* Based on the total of the polyol components.

As is apparent from the results in Table 2, it can be understood that the reactivity was high, such that the rise time was 39 to 72 seconds, and density, rebound resilience, and the state of cells were each good, in all Examples.

When the presence or absence of the amine odors of the polyurethane foams during the foaming and expanding, and the amine odors of the solidified polyurethane foams when they were removed from the

polypropylene beakers were assessed by organoleptic examination, no amine odors were found at all. The results are also shown in Table 2.

Further, each polyurethane foam having a polyvinyl chloride resin surface film on it was placed in a bottle, the mouth of the glass bottle was closed, and after the bottle was allowed to stand in an oven at 80 °C for 168 hours, the degree of discoloration of the vinyl chloride resin surface film was estimated by a Hunter color difference meter. For reference, the relationship between the ΔE value and the degree of discoloration estimated visually is shown below.

| ΔE value | Degree of discoloration visually estimated |
|---|---|
| $0 \leqq \Delta E < 1.5$ | no discoloration |
| $1.5 \leqq \Delta E < 3.0$ | detectable discoloration |
| $3.0 \leqq \Delta E < 6.0$ | conspicuous discoloration |
| $6.0 \leqq \Delta E$ | intense discoloration |

The results of the measurement of the E value are shown in Table 2. In Examples 1 to 7, the E values were in the range of 1.5 to 3.0, indicating that there was very slight discoloration, but the assessment was carried out using a closed glass bottle, so that discoloration giving a E value of 3.0 or below will be substantially unacceptable for actual products (e.g., headrests, armrests, and crash pads).

Comparative Examples 1 to 5

Polyurethane foam was prepared in the same manners as Example 1, except that instead of triamine derivatives A to E, commercially available catalysts and TMDETA in amounts in parts shown in Table 3 were used, thereby obtaining polyurethane foams having a polyvinyl chloride surface film. For the obtained polyurethane foams, the same evaluation as in Example 1 was carried out. The results are shown in Table 3.

Table 3

| Comparative Example | 1 | 2 | 3 | 4 | 5 |
|---|---|---|---|---|---|
| Polyol A | 100 | 100 | 100 | 100 | 100 |
| Deionized water | 3.0 | 3.0 | 3.0 | 3.0 | 3.0 |
| Diethanolamine | 2.0 | 2.0 | 2.0 | 2.0 | 2.0 |
| SRX-274C | 0.5 | 0.5 | 0.5 | 0.5 | 0.5 |
| TMDETA | - | - | - | - | 3.0 |
| Niax A-1 | 0.2 | - | - | - | - |
| Kao lizer | - | 0.2 | - | - | - |
| Ucat-2790 | - | - | 3.0 | - | - |
| Hx-35 | - | - | - | 3.0 | - |
| Triethylenediamine | 0.3 | 0.3 | - | - | - |
| Isocyanate B | 71.1 | 71.1 | 71.1 | 71.1 | 71.1 |
| Rise time (sec.) | 62 | 75 | 41 | 36 | 116 |
| Physical properties (measured in accordance with JIS K6401): | | | | | |
| Density ($kg/m^3$) | 52.3 | 52.0 | 51.3 | 53.2 | 60.4 |
| Ball rebound resilience (%) | 56 | 56 | 55 | 55 | 57 |
| State of cells | good | good | good | good | good |
| ΔE | 20.3 | 24.3 | 2.72 | 11.2 | 2.70 |
| Amine odors | present | present | present | present | present |

As is apparent from the results in Table 3, in Comparative Examples 1, 2, and 4, intense discoloration

was noticed on the polyvinyl chloride surface film, and amine odors were present at the time of foaming and removal from the mold. In Comparative Example 3, discoloration of the polyvinyl chloride surface film was approximately similar to that of the cases using triamine derivatives, but amine odors were present. In Comparative Example 5, amine odors were present, and the reactivity was low.

Example 8

522.5 g of Polyol C, 27.5 g of polymer modified polyol A, 11.0 g of KL-210, 19.3 g of deionized water, and 0.44 g of triethylenediamine were previously mixed, then 244.8 g of Isocyanate C was added, mixing at high speed was carried out, the mixture was poured into a mold 400 x 400 x 100 mm in inner size, whose temperature had been adjusted to 60 °C, and foaming was allowed with a lid fastened to the mold. After the foam was cured by heating for 8 minutes in a hot-air oven at 100 °C, the foam was removed from the mold. The physical properties and amine odor of the obtained foam are shown in Table 4.

Example 9

A foam was prepared by the same procedure as in Example 8, except that polymer modified polyol A in Example 8 was changed to polymer modified polyol B. The physical properties and amine odor of the obtained foam are shown in Table 4.

Example 10

550 g of Polyether C, 11.0 g of KL-210, 19.3 g of deionized water, 5.5 g of L-5309, 0.44 g of triethylenediamine, and 1.2 g of triamine derivative were previously mixed, then 244.8 g of Isocyanate C was added, mixing at high speed was carried out, the mixture was poured into a mold 400 x 400 x 100 mm in inner size, whose temperature had been adjusted to 60 °C, and foaming was allowed with a lid fastened to the mold. After the foam was cured by heating for 8 minutes in a hot-air oven at 100 °C, the foam was removed from the mold. The physical properties and amine odor of the obtained foam are shown in Table 4.

Comparative Example 6

550 g of Polyether C, 11.0 g of KL-210, 19.3 g of deionized water, 5.5 g of L-5309, 1.1 g of triethylenediamine, and 2.2 g of Dabco X-DM were previously mixed, then 244.8 g of Isocyanate H was added, after which the same processing as in Example 8 was carried out. The physical properties and amine odor of the obtained foam are shown in Table 4.

Table 4

| | Example 8 | Example 9 | Example 10 | Comparative Example 6 |
|---|---|---|---|---|
| Polyol C | 522.5 | 522.5 | 550 | 550 |
| Polymer modified polyol A | 27.5 | - | - | - |
| Polymer modified polyol B | - | 27.5 | - | - |
| KL-210 | 11.0 | 11.0 | 11.0 | 11.0 |
| Deionized water | 19.3 | 19.3 | 19.3 | 19.3 |
| L-5309 | 5.5 | 5.5 | 5.5 | 5.5 |
| Triethylenediamine | 0.44 | 0.44 | 0.44 | 0.44 |
| Triamine derivative B | - | - | 1.2 | - |
| Dabco X-DM | - | - | - | 2.2 |
| Isocyanate C | 244.8 | 244.8 | 244.8 | 244.8 |
| Ratio of triamine derivative* | 0.25 | 0.25 | 0.21 | 0 |
| Density ($kg/cm^3$) | 47.9 | 48.0 | 47.8 | 47.5 |
| Compression hardness ($kg/cm^2$) | 15.0 | 14.8 | 14.9 | 15.2 |
| 50 % Dry Set (%) | 5.8 | 6.1 | 5.9 | 5.3 |
| Ball rebound resilience (%) | 66 | 65 | 65 | 67 |
| Amine odor | None | None | None | Present |

Note : Ratio of triamine derivative to total polyol components.

As is apparent from the results of Tables 2 and 4, according to the process for producing polyurethane foams of the present invention, it is possible to produce polyurethane foams excellent in moldability with adequate reaction activity and physical properties, and without the occurrence of foul odor or color change of the covering (in particular a covering made of polyvinyl chloride resin) on polyurethane foams.

Having described our invention as related to the embodiment, it is our intention that the invention not be limited by any of the details of the description, unless otherwise specified, but rather be construed broadly within its spirit and scope as set out in the accompanying claims.

## Claims

1. In a process for producing polyurethane foams by reacting an organic polyol and an organic polyisocyanate in the presence of a blowing agent, the improvement comprising conducting the reaction by utilizing a tertiary triamine derivative represented by the following formula (I) which is obtained by an addition or a coaddition polymerization of a triamine with 1 to 10 mol of ethylene oxide, propylene oxide or mixtures thereof;

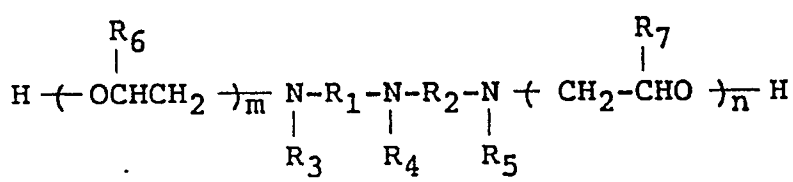

(I)

wherein $R_1$ and $R_2$, which may be the same or different, each represent an alkylene group having 1 to 10 carbon atoms, $R_3$, $R_4$, and $R_5$, which may be the same or different, each represent an alkyl group having 1 to 10 carbon atoms, $R_6$ and $R_7$, which may be the same or different, each represent hydrogen or a methyl group, and m and n each are an integer of 0 to 10, provided that m+n is not 0.

2. The process for producing polyurethane foams as claimed in claim 1, wherein in the tertiary triamine derivative of formula (I), $R_1$ and $R_2$ each represent an ethylene group, $R_3$, $R_4$, and $R_5$ each represent a methyl group, and m and n each are an integer of 0 to 3, provided that m+n is not 0.

3. The process for producing polyurethane foams as claimed in claim 1, wherein the amount of the tertiary triamine derivative to be used is 0.1 to 10 wt.% of the total amount of the polyol components.

4. The process for producing polyurethane foams as claimed in claim 1, wherein the polyurethane foam is produced by reacting an organic polyol containing the tertiary triamine derivative represented by formula (I) and an organic polyisocyanate in the presence of a blowing agent, a catalyst, and a surfactant.

5. The process for producing polyurethane foams as claimed in claim 1, wherein use is made of a polymer modified polyol that is a reaction product of (a) a mixture of the tertiary triamine derivative and a polyol with (b) a polyisocyanate.

6. The process for producing polyurethane foams as claimed in claim 5, wherein the polymer modified polyol is one obtained by a reaction in which the molar ratio of the isocyanate group to the active hydrogen of the tertiary triamine derivative is 1 : 1.5 or less (not including 0).

7. The process for producing polyurethane foams as claimed in claim 5, wherein the polyol in the mixture (a) used in the polymer modified polyol is the same as or different from the polyol used in the production of the polyurethane foam.

8. The process for producing polyurethane foams as claimed in claim 5, wherein the polyisocyanate (b) used in the polymer modified polyol is the same as or different from the polyisocyanate used in the production of the polyurethane foam.

9. The process for producing polyurethane foams as claimed in claim 1, wherein the polyol is selected from the group consisting of polyether polyols, polymer polyols, polyester polyols, polymers obtained by ring-opening polymerization of cyclic esters, and the mixtures thereof.

10. The process for producing polyurethane foams as claimed in claim 1, wherein the polyol has a hydroxyl value of 20 to 150 mg KOH/g.

11. The process for producing polyurethane foams as claimed in claim 1, wherein the polyisocyanate is selected from the group consisting of tolylene diisocyanates, diphenylmethane diisocyanate, polymethylene polyphenyl isocyanates, and the mixtures thereof.

12. The process for producing polyurethane foams as claimed in claim 1, wherein the equivalent ratio of the isocyanate group of the organic polyisocyanate and the active hydrogen in the reaction liquid is 0.7 : 1.0 to 1.4 : 1.0.

13. The process for producing polyurethane foams as claimed in claim 5, wherein the weight ratio of the polyol and the tertiary triamine derivative of formula (I) in the mixture of (a) is 100 : 1 to 100 : 20.

14. The process for producing polyurethane foams as claimed in claim 1, wherein the catalyst is selected from the group consisting of amine catalysts and organometallic urethanizing catalysts.

15. The process for producing polyurethane foams as claimed in claim 14, wherein the amine catalyst is used in an amount of 0 to 1.0 wt.% based on the total amount of the polyol components.

16. The process for producing polyurethane foams as claimed in claim 14, wherein the organometallic urethanizing catalyst is used in an amount of 0 to 0.3 wt.% based on the total amount of the polyol components.

17. The process for producing polyurethane foams as claimed in claim 1, wherein the blowing agent is selected from the group consisting of trichloromonofluoromethane, dichlorodifluoromethane, methylene chloride, trichlorofluoroethane, dibromotetrafluoroethane, trichloroethane, pentane, n-hexane, and the mixtures thereof.

18. The process for producing polyurethane foams as claimed in claim 1, wherein the surfactant is an organic silicon surfactant.

19. The process for producing polyurethane foams as claimed in claim 1, wherein the surfactant is used in an amount of 0.1 to 10 pts. wt. for 100 pts. wt. of the polyol components.